# EUROPÄISCHE PATENTSCHRIFT

(11) **EP 3 936 392 B1**
(45) Veröffentlichungstag und Bekanntmachung des Hinweises auf die Patenterteilung: **27.05.2026**
(21) Anmeldenummer: 20184769.6
(22) Anmeldetag: 08.07.2020
(51) Int. Cl.: B60S 3/04, B60S 3/06, G06V 20/56

(54) **FAHRZEUGTYPERKENNUNG**
VEHICLE TYPE DETECTION
DÉTECTION DU TYPE DE VÉHICULE

(43) Veröffentlichungstag der Anmeldung: 12.01.2022
(60) Teilanmeldung: 24216403.6
(73) Patentinhaber: Otto Christ AG, 87734 Benningen (DE)
(72) Erfinder: Christ, Markus, 87700 Memmingen (DE)
(74) Vertreter: ERNICKE Patent- und Rechtsanwälte PartmbB

(56) Entgegenhaltungen:
- WO-A1-2018/024336
- CN-A- 105 205 468
- CN-A- 110 936 925
- DE-U1- 202013 005 162
- DE-U1- 29 908 866

## Beschreibung

Die Erfindung liegt auf dem Gebiet der Steuerung von Fahrzeugbehandlungsanlagen.

Die Offenbarung betrifft insbesondere die bildliche (z.B. kameragestützte) Erfassung eines Fahrzeugs im Bereich einer Fahrzeugbehandlungsanlage zur Erkennung von Fahrzeugattributen (z.B. des Fahrzeugtyps und/oder der Fahrzeugkontur) mittels eines (cloudbasierten) Datenverarbeitungsdienstes zur Optimierung des Behandlungsprozesses in der Fahrzeugbehandlungsanlage. Die Erfindung betrifft ein computergestütztes Verfahren zur Bereitstellung eines (cloudbasierten) Datenverarbeitungsdienstes.

Die offenbarten Verfahren verfolgen einen gemeinsamen erfinderischen Gedanken, wobei die Funktionalität bevorzugt auf zwei oder mehr beteiligte Computersysteme verteilt ist, insbesondere auf mindestens ein Steuergerät an einer Fahrzeugbehandlungsanlage sowie mindestens einen Server, die miteinander (z.B. über das Internet oder ein anderes Netzwerk) in Verbindung stehen und interagieren.

Unter den Begriff Fahrzeugbehandlungsanlagen fallen insbesondere Fahrzeugwaschanlagen und Einrichtungen zur Fahrzeugpflege. Die Anlagen können sowohl auf die Behandlung von PKW, LKW, Anhängern, Schienenfahrzeugen oder andere Arten von Fahrzeugen ausgerichtet sein.

Typische Beispiele von Fahrzeugbehandlungsanlagen sind Portalwaschanlagen oder Waschstraßen. Fahrzeugbehandlungsanlagen umfassen in der Regel mehrere Behandlungsmittel wie z.B. rotierende Bürsten, Polier- oder Trocknungseinrichtungen, mit denen ein Fahrzeug zumindest teilautomatisiert behandelt werden kann. Bei der Behandlung handelt es sich in der Regel um eine oder mehrere Oberflächenbehandlungen des Fahrzeugs (z.B. Wäsche der Außenhaut, Lackpflege, Felgenwäsche, Unterbodenwäsche, etc.). Je nach Ausführungsart der Anlage kann das Fahrzeug während der Behandlung stehen oder sich durch die Anlage bewegen.

Die vorliegende Offenbarung ist grundsätzlich auf alle Arten von Fahrzeugen anwendbar. Üblicherweise ist eine Fahrzeugbehandlungsanlage auf eine Art von Fahrzeugen ausgerichtet, bspw. PKW, LKW oder Schienenfahrzeuge. Selbst unter den Fahrzeugen derselben Art (z.B. PKW) können erhebliche Unterschiede zwischen den individuellen zu behandelnden Fahrzeugen bestehen.

Eine besondere Herausforderung bei der automatisierten Fahrzeugbehandlung ist die Anpassung des Behandlungsprozesses an die verschiedenen Fahrzeugarten, Modelle, Sonderausstattungen und unterschiedlichen Fahrzeugkonturen und/oder das individuelle Fahrzeug.

Aus dem Stand der Technik (CN 105 205 468 A) ist eine Waschanlage mit einer Bilderfassungsvorrichtung bekannt, die dazu dient, Fahrgestellnummern (VIN) der zu waschenden Fahrzeuge zu erkennen. Die erkannte Fahrgestellnummer wird mit einer Datenbank abgeglichen und Typinformationen zu den Fahrzeugen, z.B. Größeninformationen, bezogen, um das Waschprogramm automatisch auszuwählen. Aus CN 110 936 925 A ist eine mehrachsige Roboterwaschanlage mit einem Verfahren bekannt, bei dem die Position und der Fahrzeugtyp des zu waschenden Fahrzeugs mit einer Kamera und einem Positionssensor aufgenommen werden.

In DE 20 2013 005 162 U1 wird ein Zugangskontrollsystem offenbart, das eine Rechteprüfung auf Basis eines durch Fernlesemittel erfassten Kennzeichens durchführt, um Zugang zu einer "für Fahrzeuge vorgesehenen Vorrichtung" zu gewähren. WO 2018/024336A1 offenbart eine Anlage zur Pflege nichtbenutzergeführter Fahrzeuge (z.B. für eine Mietfahrzeugstation), in der mit einer kameragestützten Erfassungseinrichtung der Reinigungsbedarf eines Fahrzeugs automatisch ermittelt wird.

Bei einer Oberflächenbehandlung (z.B. dem automatisierten Waschen, Polieren oder Trocknen) werden in der Regel geeignete Behandlungsmittel (z.B. rotierende Bürsten, Polierlappen oder die Düse eines Gebläses) über die Oberfläche des Fahrzeugs geführt. Dabei sollten das Behandlungsmittel und die Fahrzeugoberfläche in einem geeigneten Abstand zueinanderstehen. Häufig wird das Behandlungsmittel in einer geführten Bewegung relativ zum Fahrzeug (z.B. von vorne nach hinten) bewegt und/oder das Fahrzeug entsprechend zum Behandlungsmittel. Auch eine Kombination aus einer Bewegung eines Behandlungsmittels (z.B. Bewegung in der Senkrechten) und einer Bewegung des Fahrzeugs (z.B. Fahrbewegung in der Horizontalen) kann zu einer Relativbewegung entlang einer geeigneten Bahn zwischen Behandlungsmittel und Fahrzeug genutzt werden.

Im Stand der Technik werden Sensoren an der Fahrzeugbehandlungsanlage genutzt, um die Behandlungsmittel (z.B. eine rotierende Bürste) an der individuellen Fahrzeugoberfläche entlang zu führen. Häufig kann auch ein bestimmtes Waschprogramm vom Nutzer gewählt werden.

Die Fahrzeugbehandlungsanlage erfasst das individuelle Fahrzeug in der Regel während des Waschvorgangs abschnittsweise und ermittelt inkrementell eine geeignete Bahn zur Oberflächenbehandlung des Fahrzeugs. Aus dem Stand der Technik sind beispielsweise Techniken bekannt, bei denen über den Gegendruck des Behandlungsmittels beim Kontakt mit der Fahrzeug laufend während der Behandlung ein geeigneter Abstand zum Fahrzeug ermittelt wird.

Die Aufgabe der vorliegenden Erfindung besteht darin, die Behandlung von Fahrzeugen in einer Fahrzeugbehandlungsanlage zu optimieren.

Ein erster Aspekt der Offenbarung ist ein computerimplementiertes Verfahren zur Steuerung einer Fahrzeugbehandlungsanlage. Dieses erste Verfahren wird bevorzugt in einer Anlagensteuerung der Fahrzeugbehandlungsanlage ausgeführt. Das Verfahren kann insbesondere durch ein oder mehrere entsprechend ausgebildete Software-Module ausgeführt werden. Alternativ oder zusätzlich können auch ein oder mehrere speziell ausgebildete Datenverarbeitungssysteme eingesetzt werden.

Das Verfahren umfasst mehrere Schritte, die jeweils einzeln oder mehrfach ausgeführt werden können. Die beanspruchten Verfahren sind nicht auf die Reihenfolge der Schritte beschränkt.

Zunächst wird ein Bild-Signal einer Bilderfassungseinrichtung erfasst. Die Bilderfassungseinrichtung umfasst bevorzugt eine oder mehrere Kameras. Die Kameras oder ähnliche Mittel zur bildlichen Erfassung der Umgebung sind vorzugsweise auf einen bestimmten Bereich (z.B. den Einfahrtsbereich oder den Bereich vor einem Bedienterminal) der Fahrzeugbehandlungsanlage gerichtet. Je nach Ausführungsform der Fahrzeugbehandlungsanlage kann es vorteilhaft sein das zu analysierende Fahrzeug in einem bestimmten Bereich bzw. zu einem bestimmten Moment zu erfassen.

Das Bild-Signal umfasst vorzugsweise ein oder mehrere digitale Bilder. Das Bild-Signal kann insbesondere eine Abfolge von Bildern und/oder ein Video umfassen. Im Bild-Signal sind eine oder mehrere Repräsentationen des zu erfassenden Fahrzeugs enthalten. Es können insbesondere Bilder aus unterschiedlichen Perspektiven im Bild-Signal kombiniert und/oder fusioniert werden.

Die Bilderfassungseinrichtung kann insbesondere als separate Komponente und/oder als Software-Modul implementiert sein. Die Kamera oder ein anderer Sensor kann in der Bilderfassungseinrichtung umfasst oder als separate Komponente realisiert sein. Es können auch Daten einer bereits vorhandenen Kamera an einer Fahrzeugbehandlungsanlage verwendet werden.

Aus einem oder mehreren Bild-Signalen wird eine Fahrzeugabbildungs-Nachricht erzeugt. Die Fahrzeugabbildungs-Nachricht wird an einen Datenverarbeitungsdienst gesendet. Die Fahrzeugabbildungs-Nachricht umfasst vorzugweise eine oder mehrere Fahrzeugabbildungen des erfassten Fahrzeugs im Bereich der Fahrzeugbehandlungsanlage. Die Fahrzeugabbildungs-Nachricht kann neben einer Bildinformation zusätzliche Informationen, beispielsweise im Bezug auf die Fahrzeugbehandlungsanlage, und/oder eine Verarbeitungsanweisung für einen Datenverarbeitungsdienst umfassen.

Der erfindungsgemäße Datenverarbeitungsdienst ist vorzugsweise über das Internet oder ein anderes Datennetzwerk erreichbar. Eine oder mehrere Nachrichten können über eine geeignete Kommunikationsschnittstelle zwischen einem entfernten Datenverarbeitungsdienst und einer oder mehreren Fahrzeugbehandlungsanlagen ausgetauscht werden.

Zum Senden von Nachrichten stehen dem Fachmann unterschiedliche Daten- und oder Netzwerkprotokolle zur Verfügung. Die Nachricht kann insbesondere als Datenpaket ausgebildet sein. Eine Nachricht im Sinne dieser Offenbarung ist eine computerlesbare Information. Die Nachricht umfasst vorzugsweise eine oder mehrere Datenstrukturen mit funktionalen Daten bezüglich des Fahrzeugs, der Fahrzeugbehandlungsanlage, einer Bilderfassungseinrichtung und/oder einem Datenverarbeitungsdienst. Eine Nachricht kann direkt oder über einen Vermittler an den Empfänger gesendet werden.

Ein besonderer Vorteil der Erfindung liegt in der zentralen (insbesondere cloudbasierten) Verarbeitung von Bildinformationen der zu behandelnden Fahrzeuge. In einer bevorzugten Ausführungsform können Daten verschiedener Fahrzeugbehandlungsanlagen, die insbesondere geographisch verteilt sein können, von einem zentralen Datenverarbeitungsdienst verarbeitet werden. Weiterentwicklungen und Verbesserungen der Datenverarbeitung können an einem zentralen Ort, z.B. an einem über das Internet erreichbaren Server vorgenommen werden und unmittelbar einer Vielzahl von Anlagen zur Verfügung gestellt werden.

Ein weiterer Vorteil des Sendens von Fahrzeugabbildungs-Nachrichten an einen entfernten Datenverarbeitungsdient besteht in der Möglichkeit eine wirtschaftliche Dienstleistung auf der Verarbeitung der Fahrzeugdaten zu entwickeln. Beispielsweise ist es möglich, dass ein Betreiber einer Fahrzeugbehandlungsanlage zusätzliche Funktionen als Dienstleistung ("feature as a service") vom Hersteller der Anlage oder einem anderen Anbieter erhält.

Der Datenverarbeitungsdienst kann anhand der von einer Fahrzeugbehandlungsanlage gesendeten Fahrzeugabbildungs-Nachricht eine Steuerparameter-Nachricht erzeugen, die zur optimierten Steuerung der Fahrzeugbehandlungsanlage genutzt werden kann.

Die Steuerparameter-Nachricht kann über dieselbe oder eine weitere Kommunikationsschnittstelle zwischen einer Fahrzeugbehandlungsanlage und einem Datenverarbeitungsdienst ausgetauscht werden. Auf Seiten der Fahrzeugbehandlungsanlage wird die Steuerparameter-Nachricht empfangen. Die Steuerparameter-Nachricht umfasst vorzugsweise ein Fahrzeugattribut und/oder eine von einem Fahrzeugattribut ableitbare Steueranweisung für die Fahrzeugbehandlungsanlage. Die Steuerparameter-Nachricht kann insbesondere für eine individuelle Fahrzeugbehandlungsanlage erzeugt worden sein.

Sowohl das Senden als auch das Empfangen von Daten der hier offenbarten Komponenten kann durch unterschiedliche Kommunikationsarchitekturen verwirklicht werden. Die Kommunikation kann insbesondere auf einer Server-Client bzw. Dienstarchitektur aufbauen. Es können auch zeit- und/oder event-gesteuerte verteilte Programmabläufe genutzt werden. Eine empfangene Nachricht kann im Sinne dieser Offenbarung sowohl aktiv abgeholt als auch passiv empfangen werden. Gleiches gilt für das Senden einer Nachricht.

Ein wichtiger Aspekt der Offenbarung liegt in der verteilten Funktion auf lokale Komponenten an der Fahrzeugbehandlungsanlage und entfernte Komponenten eines (cloudbasierten) Datenverarbeitungsdienstes. Der Datenverarbeitungsdienst kann grundsätzlich an einem beliebigen Ort realisiert sein und vorzugsweise mehrere Fahrzeugbehandlungsanlagen bedienen. Bei der Verteilung der Funktionsbausteine zwischen lokalen und entfernten Computer-Komponenten umfasst die Offenbarung mehrere Ausführungsformen, die auf einem gemeinsamen Grundgedanken aufbauen.

Vorteilhafterweise werden anlagenbezogene Daten eher auf Seiten der Anlage verarbeitet. Komplexe Bildverarbeitungen, die eine hohe Rechenkapazität und/oder laufende Weiterentwicklungen beinhalten, werden vorzugsweise eher mit einem entfernten Datenverarbeitungsdienst durchgeführt.

Besonders vorteilhaft ist die Bereitstellung eines zentralen Datenvermittlungsdienstes in der Cloud, mit dem Fahrzeugbehandlungsanlagen über festgelegte Schnittstellen und Datenformate kommunizieren können, wobei die Datenverarbeitung (z.B. Bildverarbeitung und Extraktion von Fahrzeugattributen) im Hintergrund anpassbar und ggfs. auf mehrere (interne oder auch externe) Dienste oder Komponenten verteilt sein kann. Die Datenverarbeitungssysteme können auf diese Weise zentral an einer Stelle weiterentwickelt werden, während eine Vielzahl von Fahrzeugbehandlungsanlagen den Betrieb aufrechterhalten können.

Die Steuerparameter-Nachricht wird durch den Datenverarbeitungsdienst erzeugt und mit Daten versehen, die zur optimierten Steuerung der Fahrzeugbehandlungsanlage genutzt werden können. Auf Basis der Steuerparameter-Nachricht kann ein Steuer-Signal zur Steuerung der Fahrzeugbehandlungsanlage erzeugt werden.

Zur Erzeugung des Steuer-Signals können Daten der Fahrzeugbehandlungsanlage selbst und/oder Daten einer Steuerparameter-Nachricht eines entfernten Datenverarbeitungsdienstes verwendet werden. Besonders vorteilhaft ist die Kombination von lokal verfügbaren Sensordaten, beispielsweise zur Lokalisierung des Fahrzeugs während des Behandlungsprozesses, und Fahrzeugattributen, die mit einer in der Cloud durchgeführten Bildverarbeitung ermittelt wurden.

Das Steuer-Signal kann sowohl ein logischer Datensatz innerhalb eines Steuerprogramms der Fahrzeugbehandlungsanlage als auch ein direktes Steuersignal für ein bestimmtes Behandlungsmittel der Fahrzeugbehandlungsanlage sein.

Mit dem zweiten erfindungsgemäßen computerimplementierten Verfahren wird der Datenverarbeitungsdienst für Fahrzeugbehandlungsanlagen bereitgestellt. Auch das zweite Verfahren umfasst mehrere Schritte, die jeweils einzeln oder mehrfach ausgeführt werden können. Das Verfahren ist nicht auf die hier beschriebene Reihenfolge beschränkt.

Der Datenverarbeitungsdienst empfängt eine oder mehrere Fahrzeugabbildungs-Nachrichten von einer oder mehreren Fahrzeugbehandlungsanlagen. Die Fahrzeugabbildungs-Nachrichten können neben der einen oder mehreren Fahrzeugabbildungen zusätzlich weitere Verarbeitungsdaten und/oder Anfragen umfassen.

Zweck der Verarbeitung der Fahrzeugabbildungs-Nachrichten im entfernten Datenverarbeitungsdienst ist die Ermittlung und zur Verfügungstellung von fahrzeugbezogenen Informationen für die optimierte Behandlung des Fahrzeugs in der Fahrzeugbehandlungsanlage.

Die Fahrzeugabbildungs-Nachricht umfasst eine Fahrzeugabbildung, die ein Fahrzeug im Bereich der Fahrzeugbehandlungsanlage betrifft. Die Fahrzeugabbildung kann das Fahrzeug ganz oder teilweise bildlich wiedergeben. Die eine oder mehreren Fahrzeugabbildungen werden mit geeigneten Bildverarbeitungsmitteln verarbeitet. Die Verarbeitung erfolgt in mehreren Schritten. Diese Schritte erfolgen externen Verarbeitungsmitteln. Erfindungsgemäß wird aus einer Fahrzeugabbildung in einem ersten Schritt ein Fahrzeugtyp ermittelt. Dazu wird ein externer Bildverarbeitungsdienst genutzt.

Der Fahrzeugtyp kann insbesondere ein herstellerbezogenes Modell bzw. eine Modellvariante sein. Der Fahrzeugtyp kann alternativ oder zusätzlich auch eine Gattung von Fahrzeugen (z.B. Kombi, Limousine, SUV) beschreiben. In einem zweiten Schritt können anhand des Fahrzeugtyps (weitere) Fahrzeugattribute ermittelt werden, die zur optimierten Behandlung des Fahrzeugs in der Fahrzeugbehandlungsanlage genutzt werden können. Das Fahrzeugattribut umfasst Daten über die Geometrie des Fahrzeugs.

Für die Ermittlung der Fahrzeugattribute auf Basis der Fahrzeugabbildungs-Nachricht umfasst die Offenbarung verschiedene Ausführungsformen.

Das Fahrzeugattribut ist aus einer bildlichen Wiedergabe des Fahrzeugs ableitbar. Ggf. werden zusätzlich zur bildlichen Wiedergabe des Fahrzeugs noch Informationen aus weiteren Quellen, z.B. Fahrzeugdatenbanken, herangezogen.

Das Fahrzeugattribut kann insbesondere gruppentypische Informationen und/oder Fahrzeugindividuelle Informationen umfassen. Eine gruppentypische Information wäre beispielsweise die Außenkontur oder eine Abmessung eines serienmäßigen Fahrzeugs eines bestimmten Fahrzeugtyps eines Herstellers. Beispielsweise kann durch Bildverarbeitung der Fahrzeugabbildung der Hersteller und die Modellvariante des Fahrzeugs ermittelt werden und anhand des Modells eine Spezifikation dieses Fahrzeugmodells aus einer Datenbank abgerufen werden. Die gruppentypischen Informationen können insbesondere aus Datenbanken von Drittanbietern und/oder eigens für diesen Zweck aufgebauten Datensammlungen bezogen werden.

Alternativ oder zusätzlich zu gruppentypischen Informationen kann das Fahrzeugattribut auch fahrzeugindividuelle Informationen umfassen. Eine fahrzeugindividuelle Information ist beispielsweise der individuelle Verschmutzungsgrad des Fahrzeugs oder ein individueller Sonderaufbau des Fahrzeugs sein. Die Ermittlung von Fahrzeugattributen zur Erzeugung einer Steuerparameter-Nachricht kann insbesondere eine Kombination aus gruppentypischen Informationen und fahrzeugindividuellen Informationen umfassen. Besonders vorteilhaft ist die Zuordnung des abgebildeten Fahrzeugs zu einer vorbekannten Kategorie von Fahrzeugen (z.B. Hersteller und Modellvariante) und ein Vergleich der tatsächlichen Abbildung des Fahrzeugs mit einem serienmäßigen Ausführung des Fahrzeugs. Dabei können insbesondere Abweichungen des individuellen Fahrzeugs zum serienmäßigen bzw. gruppentypischen Form der Fahrzeugkategorie ermittelt werden. Solche Abweichungen können auch als zusätzliche Daten eines Fahrzeugattributs übermittelt werden.

Eine besonders vorteilhafte Ausführungsform ist die Ermittlung einer Fahrzeugkontur und/oder eines virtuellen Fahrzeugmodells. Eine Fahrzeugkontur umfasst geometrische Abmessungen der Außenhaut des Fahrzeugs. Die Fahrzeugkontur kann insbesondere als zwei- oder dreidimensionale Kurve bzw. Fläche repräsentiert werden. Die Fahrzeugkontur gibt Informationen über die in der Fahrzeugbehandlungsanlage zu behandelnden Oberflächen des Fahrzeugs.

Ein besonderer Vorteil der Ermittlung eines oder mehrerer Fahrzeugattribute auf Basis einer Fahrzeugabbildung besteht darin, dass der Fahrzeugbehandlungsanlage bereits vor Beginn und/oder während eines Behandlungsprogramms Daten über die Fahrzeuggeometrie zur Verfügung gestellt werden können. Während der Behandlung (z.B. Wäsche) des Fahrzeugs kann das Fahrzeug häufig nur abschnittsweise oder inkrementell erfasst werden. Es ist daher besonders vorteilhaft bereits vor Beginn des Behandlungsprozesses (z.B. im Einfahrtsbereich) eine Bildaufnahme des Fahrzeugs zu erzeugen und daraus möglichst vollständige Geometrieinformationen über das Fahrzeug zu ermitteln.

Besonders vorteilhaft ist auch die Bereitstellung von Fahrzeugattributen eines bildlich erfassten Fahrzeugs in Echtzeit oder Nahezu-Echtzeit der Fahrzeugbehandlungsanlage zur Verfügung zu stellen. Vorzugsweise sind die hier offenbarten Verfahren dazu ausgebildet, ein Fahrzeug mit einer Bilderfassungseinrichtung zu erfassen und Fahrzeugattribute für ein unmittelbar bevorstehendes Behandlungsprogramm bereitzustellen. Die Bereitstellung erfolgt durch automatisierte Verarbeitung der Bildinformationen. So kann beispielsweise der Fahrer eines Fahrzeugs im Einfahrtbereich der Fahrzeugbehandlungsanlage ein Behandlungsprogramm auswählen, dass die hier offenbarte Technik optimiert und/oder an das Fahrzeug angepasst wird. Vorzugsweise liegen zwischen der bildlichen Erfassung des Fahrzeugs und der Anpassung des Behandlungsprogramms auch das erfasste Fahrzeug nur wenige Sekunden oder Minuten.

Ein weiterer Vorteil der vorliegenden Erfindung ist, dass durch die Verarbeitung einer oder mehrerer Fahrzeugabbildungen ein möglichst vollständiges virtuelles Fahrzeugmodell ermittelt werden kann.

Wenn bereits vor Beginn eines Fahrzeugbehandlungsprogramms Informationen über die Geometrie oder andere Eigenschaften des Fahrzeugs zur Verfügung gestellt werden, kann das Behandlungsprogramm derart parametrisiert oder angepasst werden, dass die Ergebnisse der Fahrzeugbehandlung verbessert oder die Effizienz des Behandlungsvorgangs optimiert werden kann.

Der Datenverarbeitungsdienst stellt eine oder mehrere Steuerparameter-Nachrichten für die Oberflächenbehandlung des Fahrzeugs in der Fahrzeugbehandlungsanlage bereit. Die Steuerparameter-Nachricht kann je nach Ausführungsform unterschiedliche Daten umfassen. In einer ersten Ausführungsform umfasst die Steuerparameter-Nachricht ein oder mehrere der ermittelten Fahrzeugattribute (z.B. eine Fahrzeugkontur oder ein virtuelles Fahrzeugmodell). Die Umsetzung der Fahrzeugattribute in Steuerbefehle für die optimierte Behandlung des Fahrzeugs in der Fahrzeugbehandlungsanlage kann durch den Datenverarbeitungsdienst und/oder durch eine Komponente an der Fahrzeugbehandlungsanlage erfolgen. Die Verteilung der Verarbeitungsschritte auf diese Komponenten kann je nach Anwendungsfall unterschiedliche Vorteile haben. So kann es beispielsweise vorteilhaft sein, die in der Cloud ermittelten Fahrzeugattribute unmittelbar oder nur vorverarbeitet an die Fahrzeugbehandlungsanlage weiter zu leiten. Besonders wenn die Umsetzung der Fahrzeugattribute in konkrete Steuerbefehle vom Typ der Anlage abhängt, kann es vorteilhaft sein diese Rechenoperationen in der Fahrzeugbehandlungsanlage selbst durchzuführen. Alternativ oder zusätzlich können auch mit der Steuerparameter-Nachricht bereits Steuerinformationen bzw. Steueranweisungen vom Datenverarbeitungsdienst an die Fahrzeugbehandlungsanlage übertragen werden. Dies kann insbesondere vorteilhaft sein, wenn die Berechnung einer Steueranweisung oder eines Steuer-Signals besonders rechenintensiv ist oder häufiger Anpassungen bedarf. Beispielsweise können auch Zusatzinformationen zur Anpassung eines Behandlungsprogramms bereits im Datenverarbeitungsdienst in der Cloud berechnet werden, die mit der Steuerparameter-Nachricht an die Fahrzeugbehandlungsanlage gesendet werden.

Die Steuerparameter-Nachricht umfasst vorzugsweise eine Kombination aus ermittelten Fahrzeugattributen und/oder Steueranweisungen für die Fahrzeugbehandlungsanlage. Die Steuerparameter-Nachricht ist für eine Fahrzeugbehandlung des Fahrzeugs ausgebildet, insbesondere für eine Fahrzeugoberflächenbehandlung. Die Steuerparameter-Nachricht kann insbesondere eine Bahn- und/oder Bewegungsdaten für ein oder mehrere Behandlungsmittel (z.B. eine Waschbürste) umfassen.

Die hier beschriebenen Verfahren erreichen eine gemeinsame technische Wirkung bei der Behandlung des Fahrzeugs in der Fahrzeugbehandlungsanlage. Jedes Verfahren kann insbesondere durch ein oder mehrere Computer ausgeführt werden. Dabei ist es insbesondere möglich bzw. vorteilhaft, dass erste Verfahren zur Steuerung der Fahrzeugbehandlungsanlage auf einer Steuereinheit bzw. einem Computer an der Fahrzeugbehandlungsanlage auszuführen. Das zweite Verfahren zur Bereitstellung des Datenverarbeitungsdienstes wird vorzugsweise auf einem oder mehreren über ein Netzwerk (z.B. das Internet) erreichbaren Computern oder Servern ausgeführt. Alternativ oder zusätzlich können eines der Verfahren und/oder Teile eines Verfahrens auf einer zentralen Steuerungseinrichtung für lokal zusammenhängende Fahrzeugbehandlungsanlagen ausgeführt werden. Dies kann insbesondere für einen großen Verbund von Fahrzeugbehandlungsanlagen (z.B. in einem großen Waschpark) vorteilhaft sein.

Neben den oben beschriebenen Verfahren werden auch entsprechende Systeme zur Datenverarbeitung sowie Computerprogramme beansprucht. Ein System zur Bereitstellung eines Datenverarbeitungsdienstes im Sinne des zweiten Verfahrens umfasst vorzugsweise einen oder mehrere Server. Das System kann insbesondere einen Server mit einem Datenvermittlungsmodul umfassen. Das Datenvermittlungsmodul kann insbesondere Fahrzeugabbildungen empfangen und an weitere Verarbeitungsmodule des Dienstanbieters selbst und/oder Drittanbieterdienste vermitteln. Dabei kann insbesondere eine Vorverarbeitung oder Weiterverarbeitung der Fahrzeugabbildungen erfolgen. Auch zur Ermittlung der Fahrzeugattribute in einem oder mehreren Schritten können Daten zwischen mehreren Modulen und/oder Servern des Dienstanbieters selbst und/oder Drittanbietern vermittelt werden. Das System zur Datenverarbeitung an der Fahrzeugbehandlungsanlage kann insbesondere aus einer zentralen Anlagensteuerung oder mehreren verteilten Recheneinheiten bestehen. Teile der Datenverarbeitung können auch auf einer Bilderfassungseinrichtung und/oder einer Steuerung eines Behandlungsmittels ausgeführt werden.

Weitere vorteilhafte Ausführungsformen werden nachfolgend anhand der Zeichnungen beschrieben.

### Zeichnungsbeschreibung

Die Erfindung ist in den Zeichnungen beispielhaft und schematisch dargestellt. Es zeigen:
- Figur 1:: Zusammenwirken zwischen einer Fahrzeugbehandlungsanlage und einem entfernten Datenverarbeitungsdienst;
- Figur 2:: die Erfassung eines Fahrzeugs an einer Fahrzeugbehandlungsanlage;
- Figur 3:: die Anpassung einer Fahrzeugbehandlung an ein ermitteltes Fahrzeugattribut;
- Figur 4:: die Erkennung eines Sonderaufbaus eines Fahrzeugs;
- Figur 5:: die Behandlung eines Fahrzeugs mit einer Hinterschneidung in der Fahrzeugkontur.

### Detaillierte Beschreibung

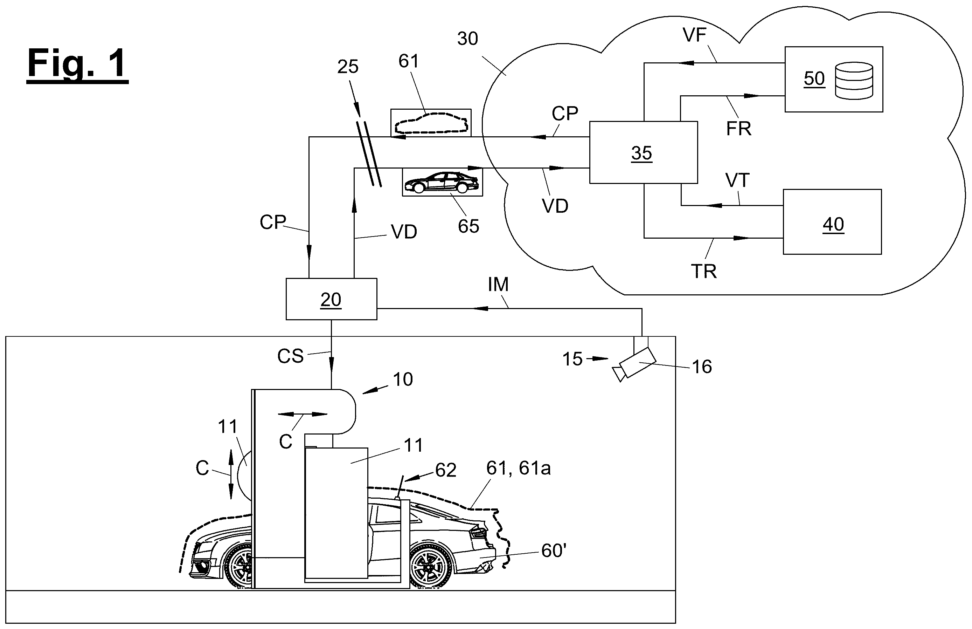

Figur 1 zeigt schematisch das Zusammenwirken zwischen dem ersten und dem zweiten hier beschriebenen computerimplementierten Verfahren. Ein Fahrzeug (60') wird im Bereich einer Fahrzeugbehandlungsanlage (10) mit einer Bilderfassungseinrichtung (15) erfasst. Die Bilderfassungseinrichtung (15) umfasst vorzugsweise eine oder mehrere Kameras (16). Die eine oder mehreren Kameras (16) sind vorzugsweise auf einen Einfahrtsbereich oder einen der Behandlungszone vorgeschalteten Bereich der Fahrzeugbehandlungsanlage (10) ausgerichtet. In Figur 1 ist die Kamera nur schematisch als Komponente dargestellt.

Die Fahrzeugbehandlungsanlage umfasst vorzugsweise eine Steuerungsvorrichtung (20). Die Steuerungsvorrichtung (20) kann sowohl eine Komponente der Anlagensteuerung als auch eine separate Berechnungs- und/oder Kommunikationseinrichtung sein. Die Steuerungsvorrichtung (20) umfasst vorzugsweise ein oder mehrere Kommunikationsmodule. Vorzugsweise kommuniziert die Steuerungsvorrichtung (20) über ein oder mehrere WUS-Systeme zur Kommunikation mit Komponenten der Fahrzeugbehandlungsanlage oder Sensoren. Die Kommunikation mit einem oder mehreren Datenverarbeitungsdiensten erfolgt vorzugsweise über eine Kommunikationsschnittstelle (25). Die Kommunikationsschnittstelle (25) kann beispielsweise über ein Mobilfunkmodem und/oder eine Netzwerkanbindung erfolgen.

Die Steuerungsvorrichtung (bezieht) Bildinformationen von der Bilderfassungseinrichtung (15). Das Bild-Signal (IM) umfasst vorzugsweise eine oder mehrere Bilder des Fahrzeugs (60). Das Bild-Signal (IM) kann vorverarbeitete Informationen einer Bilderfassungseinrichtung und/oder Rohdaten einer oder mehrerer Sensoren (beispielsweise einer Kamera) umfassen. Das Bild-Signal (IM) kann insbesondere als Datenpakete bzw. eine Nachricht oder ein ähnliches analoges oder digitales Signal übertragen werden.

Auf Basis einer oder mehrerer Bildsignale kann eine Fahrzeugabbildungs-Nachricht (VD) erzeugt werden. Die Fahrzeugabbildungs-Nachricht (VD) wird vorzugsweise von der Steuerungsvorrichtung (20) über eine Kommunikationsschnittstelle (25) an einen Datenverarbeitungsdienst (30) übertragen. Die Fahrzeugabbildungs-Nachricht (VD) umfasst vorzugsweise eine oder mehrere Fahrzeugabbildungen (65). Die Fahrzeugabbildung (65) kann beispielsweise eine Abbildung des Fahrzeugs aus einer bestimmten Perspektive und/oder einer vorverarbeitete Bildinformation aus einem oder mehreren Bild-Signalen (IM) umfassen. Besonders vorteilhaft kann die Fusion oder Kombination von mehreren Kamerabildern sein.

Der Datenverarbeitungsdienst (30) kann durch einen oder mehrere über das Internet oder ein anderes Netzwerk erreichbare Server realisiert werden. Die Funktionalität des Datenverarbeitungsdienstes kann in unterschiedlichen Ausführungsformen realisiert werden. In Figur 1 ist eine besonders vorteilhafte Ausführungsform dargestellt.

In der gezeigten Ausführungsform umfasst der Datenverarbeitungsdienst (30) ein Datenvermittlungsmodul (35). Das Datenvermittlungsmodul kann sowohl als ein Softwaremodul als auch ein eigener Server betrieben werden. Das Datenvermittlungsmodul (35) kann sowohl Daten, z.B. eine Fahrzeugabbildung (65) oder ein ermitteltes Fahrzeugattribut (61) senden bzw. empfangen. Das Datenvermittlungsmodul (35) kann alternativ oder zusätzlich auch Daten verarbeiten und/oder Anfragen an andere Systeme bzw. Dienste erzeugen.

Nach der Erfindung wird der Datenverarbeitungsdienst mit einem externen Bildverarbeitungsdienst (40) realisiert. Der Bildverarbeitungsdienst (40) kann beispielsweise Bildinformationen empfangen und verarbeiten, um Objekte zu erkennen, zu kategorisieren und/oder zu bewerten. Der Bildverarbeitungsdienst (40) kann insbesondere ein externer Dienst eines Drittanbieters sein.

Beispielsweise kann eine Vorverarbeitung von Bildinformationen im dargestellten Datenvermittlungsmodul (35) erfolgen.

Nach der Erfindung wird eine Typanfrage (TR) erzeugt. Die Typanfrage (TR) werden von dem Datenvermittlungsmodul (35) erzeugt und an einen Bildverarbeitungsdienst (40) übertragen. Der Bildverarbeitungsdienst verarbeitet die Typanfrage (TR). Die Typanfrage (TR) kann insbesondere eine oder mehrere Fahrzeugabbildungen (65) umfassen. Der Bildverarbeitungsdienst (40) gibt in Abhängigkeit der Typanfrage (TR) eine Fahrzeugtyp-Nachricht (VT) zurück. Die Fahrzeugtyp-Nachricht (VT) wird vom Bildverarbeitungsdienst (40) an ein Datenvermittlungsmodul (35) übertragen. Die Fahrzeugtyp-Nachricht (VT) umfasst vorzugsweise Daten über einen Fahrzeugtyp. Der Fahrzeugtyp kann beispielsweise mit einer Modelbezeichnung eines bestimmten Herstellers gekennzeichnet sein. Der Fahrzeugtyp kann auch in einer abstrakten Gattung von Fahrzeugen (z.B. Kombi) bestehen.

Vorteilhafterweise werden mit einem oder mehreren Datenverarbeitungsdiensten (30) ein oder mehrere Fahrzeugattribute (61) auf Basis einer oder mehrerer Fahrzeugabbildungen ermittelt. Die Fahrzeugattribute (61) sind direkt oder indirekt aus der bildlichen Darstellung des Fahrzeugs ableitbar. Je nach Ausführungsform der Erfindung können ein oder mehrere Fahrzeugattribute in ein oder mehreren Schritten in Kombination oder Unabhängig voneinander ermittelt werden. In Figur 1 ist eine besonders vorteilhafte Ausführungsform der Erfindung dargestellt, in der ein zweistufiger Verarbeitungsprozess erfolgt. Anhand des durch Bildverarbeitung ermittelten Fahrzeugtyps (z.B. Hersteller X, Model Y, Variante Z) können ein oder mehrere gruppentypische Fahrzeugattribute (61) ermittelt werden. Ein gruppentypisches Fahrzeugattribut (61) ist beispielsweise die Fahrzeugkontur, wie sie in Figur 1 durch eine gestrichelte Linie schematisch angedeutet ist. Eine solches Geometrieinformation eines bestimmten Fahrzeugtyps kann beispielsweise aus einer Datenbank abgefragt werden. Alternativ oder zusätzlich können auch Fahrzeugattribute direkt aus einer Fahrzeugabbildung (65) abgeleitet werden, z.B. durch optische Vermessung.

In einer besonders vorteilhaften Ausführungsform wird eine Eigenschaftsanfrage (FR) erzeugt und/oder an eine Fahrzeugdatenbank (50) übermittelt. Beispielsweise kann die Eigenschaftsanfrage (FR) einen zuvor ermittelten Fahrzeugtyp und/oder eine gesuchte Eigenschaft (z.B. eine Abmessung, ein virtuelles Fahrzeugmodell, eine Konturlinie, Ausstattungsvarianten) umfassen.

Auf Basis der Eigenschaftsanfrage (FR) kann aus einer Menge zuvor bekannter Fahrzeugtypen und mit diesen Typen verknüpften Eigenschaften eine gruppentypische Eigenschaft des erfassten Fahrzeugtyps ermittelt werden.

Eine oder mehrere angefragte Eigenschaften können mit einer oder mehreren Fahrzeugeigenschafts-Nachrichten (FV) übertragen werden. Beispielsweise kann die Fahrzeugdatenbank (50) die angeforderte Fahrzeugeigenschaft, insbesondere ein bestimmtes Fahrzeugattribut (61) an das Datenvermittlungsmodul (35) zurückmelden. Und/oder zur Abholdung bereitstellen.

Alternativ oder zusätzlich zu der in Figur 1 angedeuteten zweistufigen Verarbeitung können ein oder mehrere weitere Ermittlungsschritte zur Ermittlung eines Fahrzeugattributs ausgeführt werden.

Beispielsweise kann eine ermittelte Fahrzeugkontur und/oder ein virtuelles Fahrzeugmodel auf bestimmte für die Fahrzeugbehandlung relevante Eigenschaften hin kontrolliert werden. Besonders vorteilhaft ist die Verarbeitung von Geometrieinformationen und/oder Zustandsinformationen des Fahrzeugs zur Identifikation kritischer Bereiche an der Fahrzeugoberfläche. Ein kritischer Bereich einer Fahrzeugoberfläche kann beispielsweise eine abstehende Antenne (62) oder eine Hinterschneidung (63) in der Geometrie des Fahrzeugs sein.

Die Steuerparameter-Nachricht (CP) kann sowohl ein oder mehrere Fahrzeugattribute (61) als auch daraus ableitbare Steueranweisungen für die Fahrzeugbehandlungsanlage (10) umfassen.

Eine Steuerungsvorrichtung (20) an einer Fahrzeugbehandlungsanlage (10) empfängt eine Steuerparameter-Nachricht (CP). Die Steuerungsvorrichtung (20) kann dieselbe oder eine andere Steuerungsvorrichtung sein, die das Bild-Signal (IM) empfangen hat bzw. die Fahrzeugabbildungs-Nachricht (VD) gesendet hat.

Die Steuerparameter-Nachricht (CP) umfasst eine oder mehrere Fahrzeugattribute (61), die zur Behandlung des betroffenen Fahrzeugs (60') verwendet werden können. Auf Basis der Steuerparameter-Nachricht (CP) wird ein Steuer-Signal (CS) zur Steuerung der Fahrzeugbehandlungsanlage (10) erzeugt.

Je nach Ausführungsform der Erfindung kann die Verarbeitung der in der Steuerparameter-Nachricht (CP) enthaltenen Daten unterschiedlich erfolgen. In einer ersten Ausführungsform enthält die Steuerparameter-Nachricht (CP) ein Fahrzeugattribut (61), insbesondere eine Fahrzeugkontur, die in der Steuerungsvorrichtung (20) in eine geeignete Behandlungsbewegung (C) umgesetzt wird. In einer weiteren Ausführungsform umfasst die Steuerparameter-Nachricht (CP) bereits Steueranweisungen, die von der Fahrzeugbehandlungsanlage (C) umgesetzt werden können. Beispielsweise kann bereits vom Datenverarbeitungsdienst (30) eine Behandlungskontur (61a) und/oder eine von einem oder mehreren Fahrzeugattributen (61) ableitbare Behandlungsbewegung umfassen.

Das Steuer-Signal (CS) ist dazu ausgebildet ein oder mehrere Behandlungsmittel (11), insbesondere Waschbürsten, anzusteuern. Bei der Ansteuerung eines oder mehrerer Behandlungsmittel (11) können insbesondere ein oder mehrere Parameter für eine Rotations- und/oder Translationsbewegung eines Behandlungsmittels (11) vorgegeben werden. Alternativ oder zusätzlich kann auch ein Drehmoment und/oder eine Kraft, eine Dosierungsangabe, ein Volumenstrom oder eine Behandlungsdauer für ein Behandlungsmittel (11) vorgegeben werden.

Mit der vorliegenden Offenbarung können unterschiedlichste Behandlungsmittel (11) in optimierter Weise angesteuert werden. Möglich ist beispielsweise die optimierte Ansteuerung einer Waschbürste, einer Poliereinrichtung, eines Trocknungsgebläses, einer Auftragungseinrichtung oder eines anderen bekannten Behandlungsmittels in den oben bereits bezeichneten Fahrzeugbehandlungsanlagen.

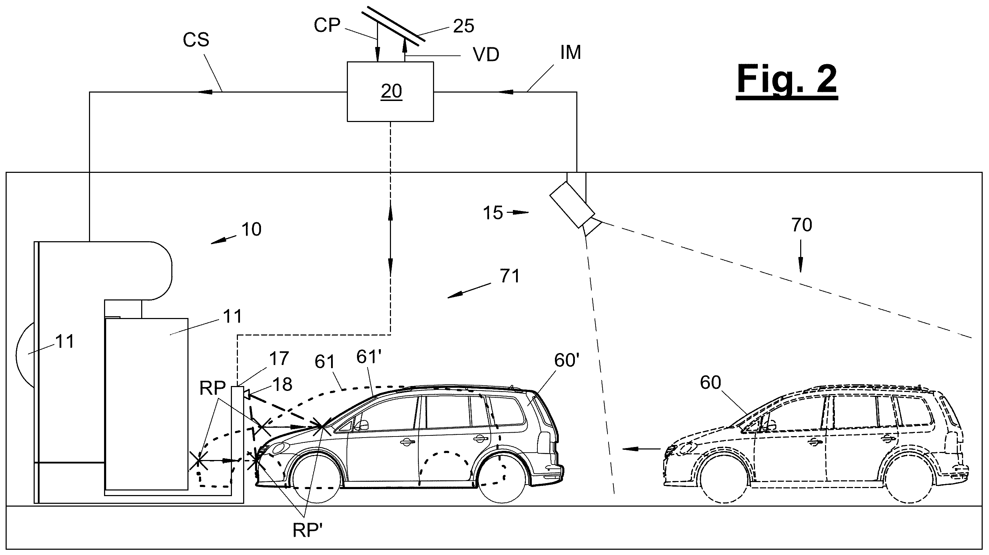

Figur 2 zeigt einen möglichen Ablauf eines Verfahrens zur Steuerung einer Fahrzeugbehandlungsanlage (10). Ein Fahrzeug (60) wird vorzugsweise in einem bestimmten Bereich an einer Fahrzeugbehandlungsanlage (10) von einer Bilderfassungseinrichtung (15) aufgenommen. Beispielsweise kann dieser Bereich in einem Einfahrtsbereich (70) der Fahrzeugbehandlungsanlage angeordnet sein. Alternativ oder zusätzlich kann das Fahrzeug auch in einem anderen Bereich aufgenommen werden, insbesondere in einem Behandlungsbereich (71) der Fahrzeugbehandlungsanlage (10). Es ist vorteilhaft das Fahrzeug (60) in einem Bereich aufzunehmen, in dem das Fahrzeug von der Bilderfassungseinrichtung möglichst vollständig erfasst werden kann. Ebenfalls vorzugsweise ist das Fahrzeug (60) zu einem Zeitpunkt vor Start des Behandlungsprogramms aufzunehmen. Dies ist besonders vorteilhaft, wenn die durch die Bildaufnahme abgeleiteten Fahrzeugattribute (61) für den unmittelbar darauffolgenden Behandlungsvorgang in Echtzeit bzw. Nahezu-Echtzeit verwendet werden sollen. In Abhängigkeit der Qualität der Kommunikationsverbindung und der Rechenleistung des Datenverarbeitungsdienstes kann die Rückmeldung der relevanten Fahrzeugattribute ausreichend schnell erfolgen, um dem Benutzer der Fahrzeugbehandlungsanlage eine unmittelbare Verbesserung der Behandlung seines Fahrzeugs zu ermöglichen.

In einer besonders vorteilhaften Ausführungsform wird auf Basis einer oder mehrerer Fahrzeugabbildungen ein virtuelles Fahrzeugmodell (61) erzeugt. Ein virtuelles Fahrzeugmodell ist eine virtuelle Repräsentation des Fahrzeugs in einer maschinenlesbaren Datenstruktur. Ein virtuelles Fahrzeugmodell kann insbesondere ein Parametersatz, ein CAD-Modell, eine Sammlung von Abmessungen, ein 3D-Modell oder eine ähnliche Repräsentation eines Fahrzeugs umfassen.

Auf Basis eines virtuellen Fahrzeugmodells kann bereits vor Beginn eines Behandlungsprogramms die Behandlung des Fahrzeugs (60') geplant werden. Beispielsweise kann bereits eine Bahn für ein Behandlungsmittel (11) entlang einer Oberfläche des Fahrzeugs berechnet werden.

In einer besonders vorteilhaften Ausführungsform wird ein Fahrzeugattribut (61) mit Daten der Fahrzeugbehandlungsanlage (10) in Verbindung gebracht. Beispielsweise können Sensordaten eines oder mehrerer Sensoren (18) in einer Steuerungsvorrichtung (20) mit Informationen aus einer oder mehreren Steuerparameter-Nachrichten (CP) in Verbindung gebracht werden.

Eine mögliche Ausführungsform einer Fahrzeugbehandlungsanlage umfasst ein oder mehrere Lokalisierungsmittel (17). Die Lokalisierungsmittel (17) können ein oder mehrere Sensoren (18) umfassen. Beispielsweise kann die Fahrzeugbehandlungsanlage eine oder mehrere Lichtschranken, Ultraschallsensoren, Kameras oder andere Mittel zur Positionserfassung eines Fahrzeugs (60') innerhalb der Fahrzeugbehandlungsanlage (10) umfassen. Es ist besonders vorteilhaft ein oder mehrere Fahrzeugattribute (61) insbesondere ein virtuelles Fahrzeugmodell, mit der tatsächlichen Position des Fahrzeugs (60') in Deckung zu bringen. Auf diese Weise kann eine im Voraus berechnete Behandlungsmethode, insbesondere eine Behandlungsbahn, auf das tatsächliche Fahrzeug angewendet werden.

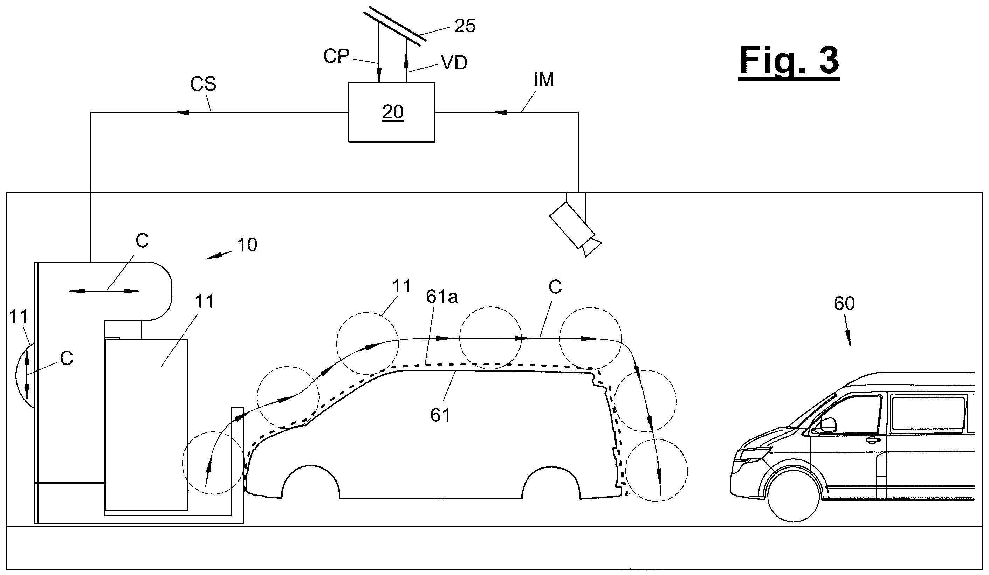

Figur 3 zeigt schematisch, wie anhand eines Fahrzeugattributs (61), z.B. eine Fahrzeugkontur oder ein virtuelles Fahrzeugmodell, ein Behandlungsprogramm des Fahrzeugs mit einem oder mehreren Behandlungsmitteln (11) vorbereitet und/oder angepasst und/oder durchgeführt werden kann.

In einer möglichen Ausführungsform wird auf Basis eines oder mehrerer Fahrzeugattribute (61) eine Behandlungskontur (61a) ermittelt. Ein solcher Ermittlungsschritt kann auf Seiten der Fahrzeugbehandlungsanlage und/oder von einem Datenverarbeitungsdienst durchgeführt werden. Für ein oder mehrere Behandlungsmittel (11) kann beispielsweise eine Behandlungsbewegung (C) entlang eines Teils der Fahrzeugoberfläche geplant werden.

In der in Figur 3 dargestellten Ausführungsform ist beispielhaft eine Bewegung einer Bürstenwalze mit horizontaler Rotationsachse einer Fahrzeugwaschanlage angedeutet. Alternativ oder zusätzlich zu dieser Behandlungsbewegung können Behandlungsvorgänge weiterer Behandlungsmittel (11) auf das zu behandelnde Fahrzeug (60) optimiert werden.

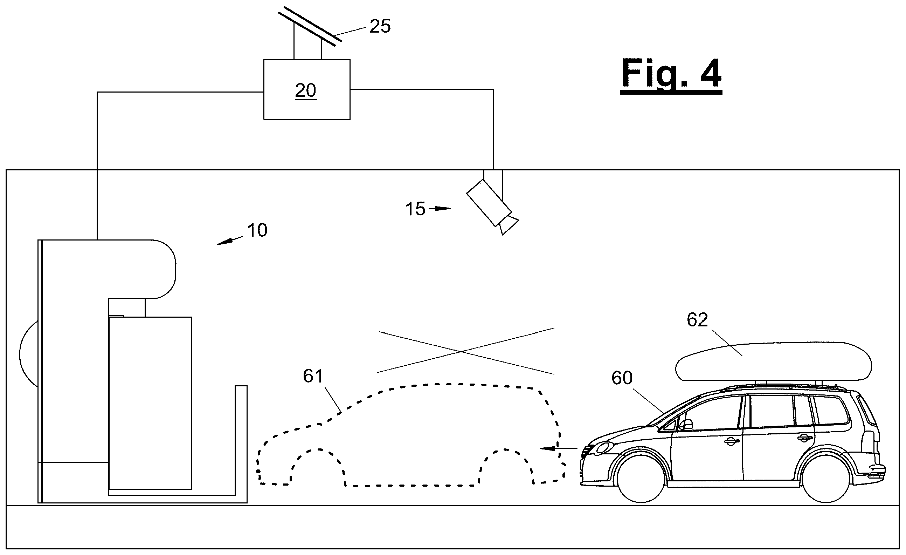

Figur 4 zeigt einen weiteren interessanten Anwendungsfall der hier offenbarten Technik, bei der durch Bildverarbeitung eine oder mehrere Sonderzustände oder Sonderausstattungen (62) eines Fahrzeugs (60) ermittelt werden. Alternativ oder zusätzlich zu den bereits erwähnten Fahrzeugattributen (61) kann insbesondere eine Abweichung eines mit einer Fahrzeugabbildung erfassten Fahrzeugs (60) von einem gruppentypischen Zustand des Fahrzeugs erfasst werden. Dies kann insbesondere auf den Fall angewendet werden, dass ein Fahrzeug einen nicht serienmäßigen Anbau wie beispielsweise einen Spoiler oder einen Dachgepäckträger umfasst.

In einer besonders vorteilhaften Ausführungsform kann mit der offenbarten Technik ein für die Behandlung in der Fahrzeugbehandlungsanlage (10) kritischer Gefahrenzustand erfasst werden. Ein solcher Gefahrenzustand kann beispielsweise durch ein offenes Fenster oder einen Dachaufbau gegeben sein.

Besonders vorteilhaft ist ein Verfahren zur Bereitstellung eines Datenverarbeitungsdienstes, bei dem das tatsächliche Fahrzeug in einer Fahrzeugabbildung (65) mit einem erwarteten Fahrzeug anhand eines Fahrzeugtyps verglichen wird und insbesondere Abweichungen festgestellt werden.

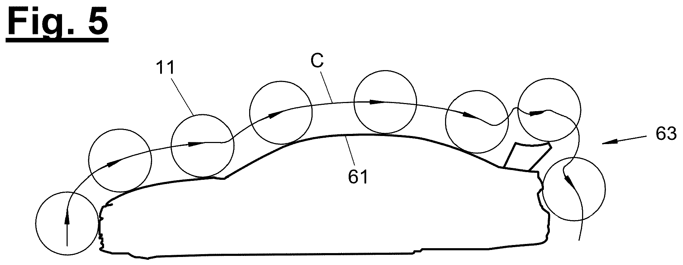

Figur 5 zeigt einen weiteren interessanten Anwendungsfall der Erfindung. In einer besonderen Ausführungsform können kritische Bereiche einer Fahrzeuggeometrie ermittelt werden. Beispielsweise können Hinterschneidungen (63) an einem Fahrzeug und/oder an einem virtuellen Fahrzeugmodell (61) ermittelt werden. Besonders vorteilhaft ist dies für die Vorausplanung und/oder die Anpassung einer Behandlungsbewegung (C) an die Geometrie des Fahrzeugs.

Eine Anpassung der Fahrzeugbehandlung an die individuelle und/oder gruppentypische Fahrzeuggeometrie ist insbesondere dann vorteilhaft, wenn manche Merkmale des Fahrzeugs mit den sonst üblichen Sensoren in einer Fahrzeugbehandlungsanlage nicht oder nur schlecht erfasst werden können. Dies kann insbesondere dadurch gegeben sein, dass in der Regel eine Relativbewegung zwischen der Fahrzeugbehandlungsanlage (10) und dem zu behandelnden Fahrzeug (60) erfolgt. Je nach Ausführungsform der Fahrzeugbehandlungsanlage (10) kann das Fahrzeug beispielsweise durch eine Waschstraße geschleppt werden und/oder Teile der Fahrzeugbehandlungsanlage entlang des Fahrzeugs bewegt werden. Je nach Anordnung der Sensoren zur Erfassung des Fahrzeugs kann die Ermittlung der Fahrzeuggeometrie, nach bisher bekannten Methoden, aufwendig oder nur im begrenzten Maße möglich sein.

Neben den in den Zeichnungen dargestellten Ausführungsformen umfasst die Offenbarung noch weitere vorteilhafte Ausführungsformen. Deren offenbarte Merkmale können insbesondere miteinander vertauscht, weggelassen, ersetzt oder ergänzt werden.

Besonders vorteilhaft ist ein computerimplementiertes Verfahren nach Anspruch 1, wobei das Steuer-Signal (CS) dazu ausgebildet ist, ein vorgegebenes Behandlungsprogramm der Fahrzeugbehandlungsanlage (10) an das erfasste Fahrzeug (60) anzupassen, insbesondere an ein oder mehrere Fahrzeugattribute (61) des Fahrzeugs (60), beispielsweise die Kontur und/oder eine Sonderausstattung des Fahrzeugs.

Beispielsweise können mit dem Steuer-Signal (CS) ein oder mehrere Parameter für ein vorgegebenes Behandlungsprogramm angepasst werden. Alternativ oder zusätzlich kann das Steuer-Signal (CS) auch das Behandlungsprogramm umfassen.

Vorzugsweise wird durch das Steuer-Signal (CS) das Behandlungsprogramm an die Fahrzeugkontur angepasst. Besonders vorteilhaft ist die Vorgabe der Fahrzeugkontur und/oder einer daran angepassten Bahn.

Eine weitere vorteilhafte Ausführungsform ist ein computerimplementiertes Verfahren nach Anspruch 1, wobei das Steuer-Signal (CS) dazu ausgebildet ist, die Behandlung des Fahrzeugs (60), insbesondere bereichsweise in Bezug auf die Fahrzeugoberfläche, zu beschleunigen und/oder zu verlangsamen und/oder zu intensivieren und/oder auszusetzen.

Durch die bildliche Erfassung des Fahrzeugs können kritische Bereiche der Fahrzeugoberfläche identifiziert werden.

Es ist besonders vorteilhaft, die Behandlung in den kritischen Bereichen anzupassen, um ein optimales Behandlungsergebnis zu erhalten.

Eine weitere Ausführungsform umfasst ein computerimplementiertes Verfahren nach Anspruch 1, wobei die Steuerparameter-Nachricht (CP) Daten bezüglich einer Typabweichung (62) des Fahrzeugs (60) umfasst.

Eine Typabweichung kann insbesondere ein Sonderzustand und/oder eine Sonderausstattung im Vergleich zu einem Serienmodell eines ermittelten Fahrzeugtyps sein.

**In** einer vorteilhaften Ausführungsform der Erfindung wird aus den durch Bildverarbeitung gewonnenen Daten ein virtuelles Fahrzeugmodell erzeugt. Dieses Fahrzeugmodell kann durch einen Datenverarbeitungsdienst und/oder auf Seiten der Fahrzeugbehandlungsanlage erzeugt werden.

Das virtuelle Fahrzeugmodell ermöglicht es die Behandlung des Fahrzeugs an einem virtuellen Modell zu planen und/oder zu simulieren. Die geplante Behandlung kann anschließend auf die Behandlung des echten Fahrzeugs übertragen werden. Dabei können insbesondere Informationen über das Fahrzeug einbezogen werden, die während der Behandlung durch die Fahrzeugbehandlungsanlage in der Regel nicht zur Verfügung stehen. Die Behandlung kann insbesondere während des Prozesses mit der am virtuellen Fahrzeugmodell simulierten Behandlung verglichen werden.

Vorteilhafterweise wird mindestens ein Fahrzeugattribut (61), insbesondere eine Fahrzeugkontur oder ein virtuelles Fahrzeugmodell, mit dem echten Fahrzeug (60') in Bezug gebracht. Beispielsweise kann das virtuelle Fahrzeugmodell in Bezug auf ein Lokalisierungsmittel (17), das Fahrzeug (60) oder die Fahrzeugbehandlungsanlage (10) lokalisiert werden. Durch die Lokalisierung des virtuellen Modells können die Behandlungsmittel (11) der Fahrzeugbehandlungsanlage anhand von Daten des virtuellen Modells gesteuert werden. Diese Daten können alternativ oder zusätzlich mit Daten anderer Sensoren der Fahrzeugbehandlungsanlage (z.B. Anpressdruck, Lichtschranken, etc.) kombiniert werden.

Vorteilhafterweise ist das System derart ausgebildet, dass die Verarbeitung der Fahrzeugabbildung (nahezu) in Echtzeit erfolgt. Für eine optimale Benutzererfahrung wird das Fahrzeug des Kunden vor Beginn der Behandlung erfasst, beispielsweise während der Benutzer ein Programm an einem Bedienterminal auswählt. Zum Zeitpunkt der Kameraerfassung ist das Fahrzeug vorzugsweise möglichst wenig verdeckt und vollständig erfassbar. Die Fahrzeugabbildungen werden online durch den Datenverarbeitungsdienst verarbeitet. Das Behandlungsprogramm kann unmittelbar nach der Erfassung des Fahrzeugs automatisiert an das Fahrzeug angepasst werden.

Nach der Erfindung umfasst das Verfahren zur Bereitstellung eines Datenverarbeitungsdienstes folgende Schritte:
- erzeugen einer Typanfrage (TR) zur Ermittlung eines Fahrzeugtyps in einer Fahrzeugabbildung (65) und
- beziehen eines Fahrzeugtyp-Signals (VT) von einem externen Bildverarbeitungsdienst (40).

In einer weiteren Ausführungsform umfasst das Verfahren die Schritte:
- erzeugen einer Eigenschaftsanfrage (FR) zur Abfrage einer Eigenschaft eines vorgegebenen Fahrzeugtyps, insbesondere aus einer Fahrzeugdatenbank (50), und/oder
- beziehen einer Fahrzeugeigenschafts-Nachricht (VF) von einer Fahrzeugdatenbank (50).

Die Offenbarung umfasst auch ein Verfahren zur Bereitstellung eines Datenverarbeitungsdienst, wobei zur Ermittlung eines Fahrzeugattributs (61) die Fahrzeugabbildung (65) mit einem gruppentypischen Fahrzeug des zuordenbaren Fahrzeugtyps verglichen wird, insbesondere zur Ermittlung einer Typabweichung (62) des Fahrzeugs (60).

Nach der Erfindung werden Daten an einen externen Bildverarbeitungsdienst gesendet. Der Bildverarbeitungsdienst ist als ein trainiertes System, beispielsweise ein künstlichen neuronales Netz oder eine Support-Vector-Machine, ausgebildet. Ein solcher Dienst ist darauf trainiert, den Fahrzeugtyp (Fahrzeughersteller, Modell, Variante) zu erkennen.

Eine weitere Ausführungsform ist ein Verfahren, bei dem ein ermitteltes Fahrzeugattribut (61) fahrzeugindividuelle Daten, insbesondere bezüglich eines Verschmutzungsgrads, einer Sonderausstattung (62) und/oder einer Typabweichung im Vergleich zu gruppentypischen Fahrzeugen, umfasst. Die fahrzeugindividuellen Daten können alternativ oder zusätzlich zu gruppentypischen Daten ermittelt werden.

Je nach Ausführungsform des Verfahrens umfasst die Steuerparameter-Nachricht (CP) mindestens eines der folgenden Elemente:
- ein ermitteltes Fahrzeugattribut (61), insbesondere ein virtuelles Fahrzeugmodell, eine Fahrzeugkontur, eine Fahrzeugform, eine Fahrzeugausstattung und/oder einen Fahrzeugtyp;
- eine Typabweichung (62) des Fahrzeugs (60), insbesondere einen Sonderzustand, eine Sonderausstattung;
- einen Verschmutzungszustand;
- eine von einem Fahrzeugattribut (61) und/oder einer Typabweichung (62) und/oder einem Verschmutzungszustand ableitbare Steueranweisung für die Fahrzeugbehandlungsanlage (10);
- einen oder mehrere Parameter für eine an ein Fahrzeugattribut (61), insbesondere an ein virtuelles Fahrzeugmodell, angepasste Behandlungsbewegung;
- ein Warnsignal in Bezug auf eine Gefahrensituation, insbesondere in Bezug auf eine nicht behandelbare Sonderausstattung (62).

### Bezugszeichenliste

| | | |
|---|---|---|
| 10 | Fahrzeugbehandlungsanlage, Fahrzeugwaschanlage | Vehicle treatment facility, vehicle washing facility |
| 11 | Behandlungsmittel, Waschbürste | Treatment means, washing brush |
| 15 | Bilderfassungseinrichtung | Imaging apparatus |
| 16 | Kamera | Camera |
| 17 | Lokalisierungsmittel | Localisation means |
| 18 | Sensor | Sensor |
| 20 | Steuerungsvorrichtung | Control device |
| 25 | Kommunikationsschnittstelle | Communication interface |
| 30 | Datenverarbeitungsdienst | Data processing service |
| 35 | Datenvermittlungsmodul | Data transmission module |
| 40 | Bildverarbeitungsdienst | Image processing service |
| 50 | Fahrzeugdatenbank | Vehicle data base |
| 60 | Fahrzeug | Vehicle |
| 61 | Fahrzeugattribut, virtuelles Fahrzeugmodell, Fahrzeugkontur, Fahrzeugform, Fahrzeugausstattung | Vehicle attribute, virtual vehicle model, vehicle contour, vehicle form, vehicle equipment |
| 61a | Behandlungskontur | Treatment contour |
| 62 | Typabweichung, Sonderzustand, Sonderausstattung, Antenne | Type deviation, special condition, special equipment, antenna |
| 63 | Hinterschneidung | Undercut |
| 65 | Fahrzeugabbildung | Vehicle depiction |
| 70 | Einfahrtsbereich | Entry area |
| 71 | Behandlungsbereich | Treatment area |
| IM | Bild-Signal | Image signal |
| VD | Fahrzeugabbildungs-Nachricht | Vehicle depiction message |
| TR | Typanfrage | Type request |
| VT | Fahrzeugtyp-Nachricht | Vehicle type message |
| FR | Eigenschaftsanfrage | Feature request |
| VF | Fahrzeugeigenschafts-Nachricht | Vehicle feature message |
| CP | Steuerparameter-Nachricht | Control parameter message |
| CS | Steuer-Signal | Control signal |
| C | Behandlungsbewegung, Steuereffekt | Treatment motion, control effect |

## Patentansprüche

1. Computerimplementiertes Verfahren zur Steuerung einer Fahrzeugbehandlungsanlage (10) umfassend die folgenden Schritte:
- beziehen eines Bild-Signals (IM) von mindestens einer Bilderfassungseinrichtung (16), die ein Fahrzeug (60) im Bereich der Fahrzeugbehandlungsanlage (10) erfasst, wobei das Bild-Signal Rohdaten einer Kamera umfasst;
- senden einer Fahrzeugabbildungs-Nachricht (VD) an einen Datenverarbeitungsdienst (30), wobei die Fahrzeugabbildungs-Nachricht (VD) eine Fahrzeugabbildung (65) umfasst, die das Fahrzeug im Bereich der Fahrzeugbehandlungsanlage betrifft;
- der Datenverarbeitungsdienst (30) erzeugt eine Typanfrage (TR) zur Ermittlung eines Fahrzeugtyps in der Fahrzeugabbildung (65) und bezieht ein Fahrzeugtyp-Signal (VT) von einem externen
Bildverarbeitungsdient (40); wobei der Datenverarbeitungsdienst (30) Daten an den externen Bildverarbeitungsdienst (40) sendet, der ein trainiertes System ist und darauf trainiert ist, den Fahrzeugtyp zu erkennen;
- der Datenverarbeitungsdienst (30) stellt eine Steuerparameter-Nachricht (CP) für die Oberflächenbehandlung des Fahrzeugs in der Fahrzeugbehandlungsanlage bereit;
- empfangen einer Steuerparameter-Nachricht (CP), die insbesondere mindestens eines der folgenden Fahrzeugattribute (61) des Fahrzeugs (60) umfasst: eine Fahrzeugkontur, eine Fahrzeugform;
- erzeugen eines Steuer-Signals (CS) zur Steuerung der Fahrzeugbehandlungsanlage (10) auf Basis der Steuerparameter-Nachricht (CP).

2. Computerimplementiertes Verfahren nach Anspruch 1, wobei der Datenverarbeitungsdienst (30) anhand des Modells eine Spezifikation dieses Fahrzeugmodells aus einer Datenbank (eines Drittanbieters) abruft.

3. Computerimplementiertes Verfahren nach Anspruch 1 oder 2, wobei der Hersteller und die Modellvariante des Fahrzeugs durch den externen Bildverarbeitungsdienst (40) und durch Bildverarbeitung der Fahrzeugabbildung (65) ermittelt werden.

4. Computerimplementiertes Verfahren nach einem der vorhergehenden Ansprüche, wobei das computerimplementierte Verfahren in einer Anlagensteuerung der Fahrzeugbehandlungsanlage (10) ausgeführt wird und wobei die Fahrzeugbehandlungsanlage eine Portalwaschanlage oder eine Waschstraße ist und rotierende Bürsten umfasst,

5. Computerimplementiertes Verfahren nach einem der vorhergehenden Ansprüche, wobei das Steuer-Signal (CS) dazu ausgebildet ist, ein vorgegebenes Behandlungsprogramm der Fahrzeugbehandlungsanlage (10) an das erfasste Fahrzeug (60) anzupassen, insbesondere an ein oder mehrere Fahrzeugattribute (61) des Fahrzeugs (60), beispielsweise die Kontur und/oder eine Sonderausstattung des Fahrzeugs.

6. Computerimplementiertes Verfahren nach einem der vorhergehenden Ansprüche, wobei die Steuerparameter-Nachricht (CP) weiterhin mindestens eines der folgenden Fahrzeugattribute (61) des Fahrzeugs (60) umfasst: ein Fahrzeugmodell, einen Fahrzeugtyp, eine Fahrzeugausstattung und/oder einen Fahrzeugzustand.

7. Computerimplementiertes Verfahren nach einem der vorhergehenden Ansprüche, wobei das Fahrzeug (60) vor Beginn eines Behandlungsvorgangs dieses Fahrzeugs (60), insbesondere in einem Einfahrtsbereich (70) der Fahrzeugbehandlungsanlage (10), mit der Bilderfassungseinrichtung (15) erfasst wird.

8. Computerimplementiertes Verfahren nach einem der vorhergehenden Ansprüche, wobei das Steuer-Signal (CS) dazu ausgebildet ist, eine Behandlungsbewegung (C), insbesondere einen Bewegungsvektor, eine Bahn oder eine Anpresskraft, mindestens eines Behandlungsmittels (11) vorzugeben und/oder eine Behandlungsbewegung (C) an ein Fahrzeugattribut (61) anzupassen, insbesondere vor Beginn des Behandlungsprogramms und/oder vor Eintritt des Fahrzeugs (60') in den Behandlungsbereich (71) der Fahrzeugbehandlungsanlage (10).

9. Computerimplementiertes Verfahren nach einem der vorhergehenden Ansprüche, wobei die Steuerparameter-Nachricht (CP) und/oder das Steuer-Signal (CS) dazu ausgebildet ist, die Fahrzeugkontur (61) für die Behandlung des Fahrzeugs (60) in der Fahrzeugbehandlungsanlage (10), insbesondere vor Beginn des Behandlungsvorgangs, vorzugeben.

10. Computerimplementiertes Verfahren nach einem der vorhergehenden Ansprüche, wobei ein Fahrzeugattribut (61), insbesondere ein virtuelles Fahrzeugmodell (61), erzeugt und/oder aus einer Steuerparameter-Nachricht (CP) abgeleitet wird.

11. Computerimplementiertes Verfahren nach einem der vorhergehenden Ansprüche, wobei die Steuerparameter-Nachricht (CP), insbesondere ein darin enthaltenes Fahrzeugattribut (61), mit Daten mindestens eines Sensors (18) der Fahrzeugbehandlungsanlage (10) in Bezug gebracht wird, wobei der Sensor (18) bevorzugt zur Detektion des Fahrzeugs (60') in der Fahrzeugbehandlungsanlage während eines Behandlungsvorgangs ausgebildet ist.

12. Computerimplementiertes Verfahren nach einem der vorhergehenden Ansprüche, wobei mit dem Steuer-Signal (CS) ein unmittelbar nach der Erfassung des Fahrzeugs (60) aktivierbares Behandlungsprogramm der Fahrzeugbehandlungsanlage (10), insbesondere in Echtzeit, an die Steuerparameter-Nachricht (CP) anpassbar ist.

13. Computerimplementiertes Verfahren zur Bereitstellung eines Datenverarbeitungsdienstes (30) für Fahrzeugbehandlungsanlagen (10) umfassend die folgenden Schritte:
- empfangen einer Fahrzeugabbildungs-Nachricht (VD), die eine Fahrzeugabbildung (65) umfasst, welche ein Fahrzeug (60) im Bereich der Fahrzeugbehandlungsanlage (10) betrifft;
- ermitteln mindestens eines Fahrzeugattributs (61) des abgebildeten Fahrzeugs (60) durch Verarbeitung der Fahrzeugabbildung (65);
- erzeugen einer Typanfrage (TR) zur Ermittlung des Fahrzeugtyps in der Fahrzeugabbildung (65), wobei der Datenverarbeitungsdienst (30) Daten an einen externen Bildverarbeitungsdienst (40) sendet, der ein trainiertes System ist und darauf trainiert ist, den Fahrzeugtyp zu erkennen;
- beziehen eines Fahrzeugtyp-Signals (VT) von dem externen
Bildverarbeitungsdienst (40);
- bereitstellen einer Steuerparameter-Nachricht (CP) für eine Fahrzeugbehandlung des Fahrzeugs (60) in der Fahrzeugbehandlungsanlage (10).

14. Computerimplementiertes Verfahren nach Anspruch 13, wobei zur Ermittlung des Fahrzeugattributs (61), insbesondere einer Fahrzeugkontur oder eines virtuellen Fahrzeugmodells, des Fahrzeugs (60) in einem ersten Zwischenschritt der Fahrzeugtyp ermittelt wird und in einem zweiten Zwischenschritt das Fahrzeugattribut (61) auf Basis des Fahrzeugtyps in einer Fahrzeugdatenbank (50) ermittelt wird.

15. Computerimplementiertes Verfahren nach einem der vorhergehenden Ansprüche, wobei das Fahrzeugattribut (61), insbesondere eine Fahrzeugtyp-Nachricht (VT), gruppentypische Daten, insbesondere herstellerbezogene und/oder modelltypische Daten, und/oder einen allgemeinen Fahrzeugtyp des Fahrzeugs (60) umfasst.

16. Computerimplementiertes Verfahren nach einem der vorhergehenden Ansprüche, wobei zur Ermittlung eines Fahrzeugattributs (61) die Fahrzeugabbildung (65) einer vorbekannten Fahrzeugkategorie zugeordnet wird.

17. System zur Datenverarbeitung, umfassend Mittel zur Ausführung des Verfahrens nach einem der Anspruche 1 bis 12 und/oder des Verfahrens nach einem der Ansprüche 13 bis 16.

18. Computerprogramm, umfassend Befehle, die bei der Ausführung des Programms durch einen Computer diesen veranlassen ein Verfahren nach einem der Ansprüche 1 bis 12 und/oder ein Verfahren nach einem der Ansprüche 13 bis 16 auszuführen

## Claims

1. Computer-implemented method for controlling a vehicle treatment facility (10) comprising the following steps:
- obtaining an image signal (IM) from at least one imaging apparatus (16) that captures a vehicle (60) in the area of the vehicle treatment facility (10), wherein the image signal comprises raw data from a camera;
- sending a vehicle depiction message (VD) to a data processing service (30), wherein the vehicle depiction message (VD) comprises a vehicle depiction (65) relating to the vehicle in the area of the vehicle treatment facility;
- the data processing service (30) generates a type request (TR) to determine a vehicle type in the vehicle depiction (65) and obtains a vehicle type signal (VT) from an external image processing service (40); wherein the data processing service (30) sends data to the external image processing service (40), which is a trained system and is trained to recognize the vehicle type;
- the data processing service (30) provides a control parameter message (CP) for the surface treatment of the vehicle in the vehicle treatment facility;
- receiving a control parameter message (CP) comprising, in particular, at least one of the following vehicle attributes (61) of the vehicle (60): a vehicle contour, a vehicle form;
- generating a control signal (CS) for controlling the vehicle treatment facility (10) based on the control parameter message (CP).

2. Computer-implemented method according to claim 1, wherein the data processing service (30) uses the model to retrieve a specification of this vehicle model from a database (of a third-party provider).

3. Computer-implemented method according to claim 1 or 2, wherein the manufacturer and model variant of the vehicle are determined by the external image processing service (40) and by image processing of the vehicle depiction (65).

4. Computer-implemented method according to one of the preceding claims, wherein the computer-implemented method is executed in a system control of the vehicle treatment facility (10) and wherein the vehicle treatment facility is a gantry car wash or a car wash tunnel and comprises rotating brushes.

5. Computer-implemented method according to one of the preceding claims, wherein the control signal (CS) is designed to adapt a predetermined treatment program of the vehicle treatment facility (10) to the detected vehicle (60), in particular to one or more vehicle attributes (61) of the vehicle (60), for example the contour and/or special equipment of the vehicle.

6. Computer-implemented method according to one of the preceding claims, wherein the control parameter message (CP) further comprises at least one of the following vehicle attributes (61) of the vehicle (60): a vehicle model, a vehicle type, vehicle equipment, and/or a vehicle condition.

7. Computer-implemented method according to one of the preceding claims, wherein the vehicle (60) is detected by the imaging apparatus (15) before the start of a treatment process of this vehicle (60), in particular in an entry area (70) of the vehicle treatment facility (10).

8. Computer-implemented method according to one of the preceding claims, wherein the control signal (CS) is designed to specify a treatment motion (C), in particular a movement vector, a path or a contact force, of at least one treatment means (11) and/or to adapt a treatment motion (C) to a vehicle attribute (61), in particular before the start of the treatment program and/or before the vehicle (60') enters the treatment area (71) of the vehicle treatment facility (10).

9. Computer-implemented method according to one of the preceding claims, wherein the control parameter message (CP) and/or the control signal (CS) is designed to specify the vehicle contour (61) for the treatment of the vehicle (60) in the vehicle treatment facility (10), in particular before the start of the treatment process.

10. Computer-implemented method according to one of the preceding claims, wherein a vehicle attribute (61), in particular a virtual vehicle model (61), is generated and/or derived from a control parameter message (CP).

11. Computer-implemented method according to one of the preceding claims, wherein the control parameter message (CP), in particular a vehicle attribute (61) contained therein, is related to data from at least one sensor (18) of the vehicle treatment facility (10), wherein the sensor (18) is preferably designed to detect the vehicle (60') in the vehicle treatment facility during a treatment process.

12. Computer-implemented method according to one of the preceding claims, wherein the control signal (CS) can be adapted to the control parameter message (CP), in particular in real time, to activate a treatment program of the vehicle treatment facility (10) immediately after the vehicle (60) has been detected.

13. Computer-implemented method for providing a data processing service (30) for vehicle treatment facilities (10), comprising the following steps:
- receiving a vehicle depiction message (VD) comprising a vehicle depiction (65) relating to a vehicle (60) in the area of the vehicle treatment facility (10);
- determining at least one vehicle attribute (61) of the imaged vehicle (60) by processing the vehicle depiction (65);
- generating a type request (TR) to determine the vehicle type in the vehicle depiction (65), wherein the data processing service (30) sends data to an external image processing service (40), which is a trained system and is trained to recognize the vehicle type;
- obtaining a vehicle type signal (VT) from the external image processing service (40);
- providing a control parameter message (CP) for vehicle treatment of the vehicle (60) in the vehicle treatment facility (10).

14. Computer-implemented method according to claim 13, wherein, in order to determine the vehicle attribute (61) of the vehicle (60), in particular a vehicle contour or a virtual vehicle model, the vehicle type is determined in a first intermediate step and, in a second intermediate step, the vehicle attribute (61) is determined on the basis of the vehicle type in a vehicle data base (50).

15. Computer-implemented method according to one of the preceding claims, wherein the vehicle attribute (61), in particular a vehicle type message (VT), comprises group-typical data, in particular manufacturer-related and/or model-typical data, and/or a general vehicle type of the vehicle (60).

16. Computer-implemented method according to one of the preceding claims, wherein, in order to determine a vehicle attribute (61), the vehicle depiction (65) is assigned to a previously known vehicle category.

17. Data processing system comprising means for executing the method according to one of claims 1 to 12 and/or the method according to one of claims 13 to 16.

18. Computer program comprising instructions which, when executed by a computer, cause the computer to execute a method according to one of claims 1 to 12 and/or a method according to one of claims 13 to 16.

## Revendications

1. Procédé mis en œuvre par ordinateur pour commander une installation de traitement de véhicule (10), comprenant les étapes suivantes :
- obtention d'un signal d'image (IM) en provenance d'au moins un dispositif de capture d'image (16) qui capture un véhicule (60) dans la zone de l'installation de traitement de véhicule (10), le signal d'image comprenant des données brutes d'une caméra ;
- envoi d'un message d'image de véhicule (VD) à un service de traitement de données (30), le message d'image de véhicule (VD) comprenant une image de véhicule (65) relative au véhicule dans la zone de l'installation de traitement de véhicule ;
- génération, par le service de traitement de données (30), d'une demande de type (TR) pour déterminer un type de véhicule dans l'image de véhicule (65) et obtention d'un signal de type de véhicule (VT) en provenance d'un service de traitement d'image externe (40) ; le service de traitement de données (30) envoyant des données au service de traitement d'image externe (40), lequel est un système entraîné et est entraîné à reconnaître le type de véhicule ;
- fourniture par le service de traitement de données (30) d'un message de paramètre de commande (CP) pour le traitement de surface du véhicule dans l'installation de traitement de véhicule ;
- réception d'un message de paramètre de commande (CP), lequel comprend en particulier au moins l'un des attributs de véhicule (61) suivants du véhicule (60) : un contour de véhicule, une forme de véhicule ;
- génération d'un signal de commande (CS) pour commander l'installation de traitement de véhicule (10) sur la base du message de paramètre de commande (CP).

2. Procédé mis en œuvre par ordinateur selon la revendication 1, dans lequel le service de traitement de données (30) récupère, à partir d'une base de données (d'un fournisseur tiers) et sur la base du modèle, une spécification de ce modèle de véhicule.

3. Procédé mis en œuvre par ordinateur selon la revendication 1 ou 2, dans lequel le constructeur et la variante de modèle du véhicule sont déterminés par le service de traitement d'image externe (40) et par traitement d'image de l'image de véhicule (65).

4. Procédé mis en œuvre par ordinateur selon l'une des revendications précédentes, dans lequel le procédé mis en œuvre par ordinateur est mis en œuvre dans un système de commande d'installation de l'installation de traitement de véhicule (10), et dans lequel l'installation de traitement de véhicule est une installation de lavage à portique ou une station de lavage, et comprend des brosses rotatives.

5. Procédé mis en œuvre par ordinateur selon l'une des revendications précédentes, dans lequel le signal de commande (CS) est conçu pour adapter un programme de traitement prédéfini de l'installation de traitement de véhicule (10) au véhicule capturé (60), en particulier à un ou plusieurs attributs de véhicule (61) du véhicule (60), par exemple le contour et/ou un équipement spécial du véhicule.

6. Procédé mis en œuvre par ordinateur selon l'une des revendications précédentes, dans lequel le message de paramètre de commande (CP) comprend en outre au moins l'un des attributs de véhicule (61) suivants du véhicule (60) : un modèle de véhicule, un type de véhicule, un équipement de véhicule et/ou un état de véhicule.

7. Procédé mis en œuvre par ordinateur selon l'une des revendications précédentes, dans lequel le véhicule (60) est capturé par le dispositif de capture d'image (15) avant le début d'un processus de traitement de ce véhicule (60), en particulier dans une zone d'entrée (70) de l'installation de traitement de véhicule (10).

8. Procédé mis en œuvre par ordinateur selon l'une des revendications précédentes, dans lequel le signal de commande (CS) est conçu pour prédéfinir un mouvement de traitement (C), en particulier un vecteur de mouvement, une trajectoire ou une force d'appui, d'au moins un moyen de traitement (11) et/ou pour adapter un mouvement de traitement (C) à un attribut de véhicule (61), en particulier avant le début du programme de traitement et/ou avant l'entrée du véhicule (60) dans la zone de traitement (71) de l'installation de traitement de véhicule (10).

9. Procédé mis en œuvre par ordinateur selon l'une des revendications précédentes, dans lequel le message de paramètre de commande (CP) et/ou le signal de commande (CS) est conçu pour prédéfinir le contour de véhicule (61) pour le traitement du véhicule (60) dans l'installation de traitement de véhicule (10), en particulier avant le début du processus de traitement.

10. Procédé mis en œuvre par ordinateur selon l'une des revendications précédentes, dans lequel un attribut de véhicule (61), en particulier un modèle de véhicule virtuel (61), est généré et/ou dérivé à partir d'un message de paramètre de commande (CP).

11. Procédé mis en œuvre par ordinateur selon l'une des revendications précédentes, dans lequel le message de paramètre de commande (CP), en particulier un attribut de véhicule (61) qu'il contient, est lié à des données d'au moins un capteur (18) de l'installation de traitement de véhicule (10), le capteur (18) étant de préférence conçu pour détecter le véhicule (60') dans l'installation de traitement de véhicule pendant un processus de traitement.

12. Procédé mis en œuvre par ordinateur selon l'une des revendications précédentes, dans lequel, au moyen du signal de commande (CS), un programme de traitement de l'installation de traitement de véhicule (10), activable immédiatement après la capture du véhicule (60), peut être adapté au message de paramètre de commande (CP), en particulier en temps réel.

13. Procédé mis en œuvre par ordinateur pour fournir un service de traitement de données (30) destiné à des installations de traitement de véhicules (10), comprenant les étapes suivantes :
- réception d'un message d'image de véhicule (VD) comprenant une image de véhicule (65) relative à un véhicule (60) dans la zone de l'installation de traitement de véhicule (10) ;
- détermination d'au moins un attribut de véhicule (61) du véhicule (60) représenté, par un traitement de l'image de véhicule (65) ;
- génération d'une demande de type (TR) pour déterminer le type de véhicule dans l'image de véhicule (65), le service de traitement de données (30) envoyant des données à un service de traitement d'image externe (40), lequel est un système entraîné et est entraîné à reconnaître le type de véhicule ;
- obtention d'un signal de type de véhicule (VT) en provenance du service de traitement d'image externe (40) ;
- fourniture d'un message de paramètre de commande (CP) pour un traitement du véhicule (60) dans l'installation de traitement de véhicule (10).

14. Procédé mis en œuvre par ordinateur selon la revendication 13, dans lequel, pour déterminer l'attribut de véhicule (61), en particulier un contour de véhicule ou un modèle de véhicule virtuel, du véhicule (60), le type de véhicule est déterminé lors d'une première étape intermédiaire et, lors d'une deuxième étape intermédiaire, l'attribut de véhicule (61) est déterminé sur la base du type de véhicule dans une base de données de véhicules (50).

15. Procédé mis en œuvre par ordinateur selon l'une des revendications précédentes, dans lequel l'attribut de véhicule (61), en particulier un message de type de véhicule (VT), comprend des données typiques de groupes, en particulier des données relatives au constructeur et/ou typiques de modèles, et/ou un type de véhicule général du véhicule (60).

16. Procédé mis en œuvre par ordinateur selon l'une des revendications précédentes, dans lequel, pour déterminer un attribut de véhicule (61), l'image de véhicule (65) est associée à une catégorie de véhicule connue à l'avance.

17. Système de traitement de données, comprenant des moyens pour mettre en œuvre le procédé selon l'une des revendications 1 à 12 et/ou le procédé selon l'une des revendications 13 à 16.

18. Programme d'ordinateur comprenant des instructions qui, lorsque le programme est exécuté par un ordinateur, amènent celui-ci à mettre en œuvre un procédé selon l'une des revendications 1 à 12 et/ou un procédé selon l'une des revendications 13 à 16.
